# EUROPÄISCHE PATENTANMELDUNG

(11) **EP 3 835 334 A1**
(43) Veröffentlichungstag der Anmeldung: **16.06.2021**
(21) Anmeldenummer: 19214906.0
(22) Anmeldetag: 10.12.2019
(51) Int. Cl.: C08G 18/08, C08G 18/32, C08G 18/42, C09J 175/06

(54) **VERWENDUNG VON DISPERSIONSKLEBSTOFFEN FÜR DIE SCHAUMVERKLEBUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft die Verwendung einer wässrigen Dispersion enthaltend mindestens ein Polyurethan-Polyharnstoff-Polymer aufgebaut aus (a) mindestens einem difunktionellen Polyesterpolyol mit einem zahlenmittleren Molekulargewicht von 400 bis 5000 g/mol, (b) mindestens einer difunktionellen Polyolkomponente mit einem zahlenmittleren Molekulargewicht von 62 bis 399 g/mol, (c) mindestens einem Diisocyanat und (d) mindestens einem Kettenverlängerer mit gegebenenfalls mindestens einer ionischen Gruppe, für die Verklebung von mindestens zwei Subtraten durch Applikation der wässrigen Dispersion auf mindestens eines der zu verklebenden Substrate, anschließendes Trocknen der auf dem mindestens einen Substrat vorhandenen Dispersion, um mindestens eine Klebstoffschicht zu erhalten und Inkontaktbringen der mindestens einen Klebstoffschicht mit einem weiteren Substrat oder mit einer auf einem weiteren Substrat vorhandenen Klebstoffschicht bei einem Druck von 0,1 bis 5 bar(a) und einer Temperatur von weniger als 40 °C, wobei das Polyurethan-Polyharnstoff-Polymer nach der Trocknung eine Glasübergangstemperatur Tg von -65 bis 10 °C und eine Schmelztemperatur von 40 bis 80 °C aufweist, ein entsprechendes Verfahren zum Verbinden von mindestens zwei Substraten, sowie einen so erhaltenen Klebstoffverbund, umfassend mindestens zwei Substrate und eine zwischen jeweils zwei Substraten vorhandene Klebstoffschicht.

## Beschreibung

Die Erfindung betrifft die Verwendung einer wässrigen Dispersion enthaltend mindestens ein Polyurethan-Polyharnstoff-Polymer aufgebaut aus (a) mindestens einem difunktionellen Polyesterpolyol mit einem zahlenmittleren Molekulargewicht von 400 bis 5000 g/mol, (b) mindestens einer difunktionellen Polyolkomponente mit einem zahlenmittleren Molekulargewicht von 62 bis 399 g/mol, (c) mindestens einem Diisocyanat und (d) mindestens einem Kettenverlängerer gegebenenfalls enthaltend mindestens eine ionische Gruppe, für die Verklebung von mindestens zwei Subtraten durch Applikation der wässrigen Dispersion auf mindestens eines der zu verklebenden Substrate, anschließendes Trocknen der auf dem mindestens einen Substrat vorhandenen Dispersion, und Inkontaktbringen der mindestens einen Klebstoffschicht mit einem weiteren Substrat oder mit einer auf einem weiteren Substrat vorhandenen Klebstoffschicht bei einem Druck von 0,1 bis 10 bar(a) und einer Temperatur von weniger als 40 °C, wobei das Polyurethan-Polyharnstoff-Polymer nach der Trocknung eine Glasübergangstemperatur Tg von -65 bis 10 °C und eine Schmelztemperatur von 40 bis 80 °C aufweist, ein entsprechendes Verfahren zum Verbinden von mindestens zwei Substraten, sowie einen so erhaltenen Klebstoffverbund, umfassend mindestens zwei Substrate und eine zwischen jeweils zwei Substraten vorhandene Klebstoffschicht.

Bei der Verklebung von Schaumsubstraten mit anderen Substraten, beispielsweise bei den Kombinationen Schaum-Schaum, Schaum-Holz und Schaum-Kunststoff, werden überwiegend Polychloropren-Dispersionsklebstoffe nach dem Sprühkoagulationsverfahren eingesetzt. Bei diesem Verfahren werden der Klebstoff sowie ein Koagulationsmittel separat in eine Sprühpistole gefördert, im Sprühstrahl vermischt und koaguliert. Da die Vermischung erst im Sprühstrahl stattfindet, ist keine Topfzeit zu beachten. Zudem verbleibt der koagulierte Klebstoff an der zu verklebenden Substratoberfläche und diffundiert nicht oder nur zu einem geringen Teil in die Porenstruktur der Schaumsubstrate. Häufig werden hohe Anfangsfestigkeiten, ausreichend lange offene Zeiten und gute Wärmefestigkeiten erzielt.

Wichtige Anwendungsgebiete dieser Technologie sind die Herstellung von Matratzen und Sitzmöbeln. Insbesondere aus den skandinavischen Ländern kommt die Forderung nach Chlorfreien Alternativen für die Polychloropren-Dispersionsklebstoffe, um beispielsweise die Anforderungen des Nordic Ecolabels erfüllen zu können. Zusätzlich sollen sie sich durch hohe Anfangsfestigkeiten und eine ausreichend lange offene Zeit auszeichnen.

Klebstoffe auf Basis von wässrigen Polyurethan-Dispersionen haben sich weltweit in anspruchsvollen industriellen Anwendungen etabliert, zum Beispiel bei der Schuhfertigung, der Verklebung von Teilen für die KFZ-Innenausstattung, der Folienlaminierung oder der Verklebung von textilen Substraten.

Bei der Verwendung von Polyurethan-Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur. Die Verklebung findet hierbei bei Temperaturen oberhalb der Schmelztemperatur und unter Druck statt, weshalb eine hohe Temperaturbeständigkeit der Substrate bei dem notwendigen hohen Druck für eine erfolgreiche Verklebung wünschenswert ist. Die erhaltene Klebenaht zeichnet sich weiter durch eine hohe Festigkeit aber auch Steifigkeit aus, weshalb die Verwendung von Polyurethan-Dispersionen zur Verklebung von weichen schaumigen Substraten, die bei höheren Aktiviertemperaturen irreversibel verformt werden können, bisher nicht beschrieben ist. Weiter erhält man nach dem gängigen Verfahren oft eine steife, durchgängige Klebenaht, die den Komfort des weichen Schaums zum Teil erheblich beeinträchtigt.

Bei der Verwendung von Polyurethan- bzw. Polyurethan-Polyharnstoff-Dispersionen kann aber auch nach dem Verfahren der Nassverklebung gearbeitet werden, d.h. die Durchführung der Verklebung erfolgt unmittelbar nach dem Klebstoffauftrag. Bis zum Abbinden des Klebstoffes ist eine mechanische Fixierung der zu verbindenden Teile erforderlich. Dieses Verfahren wird häufig zur Verklebung von Holz oder textilen Substraten verwendet.

Sowohl das klassische Thermoaktivierverfahren als auch das Verfahren der Nassverklebung sind für die Verklebung von Schaumsubstraten wenig geeignet. Insbesondere die langsame Verdampfung des Wassers erfordert lange Wartezeiten zwischen Klebstoffauftrag und Klebevorgang oder entsprechende Trockenanlagen. Zudem kann ein nicht unerheblicher Teil des Klebstoffs vor oder während der Trocknung in die Poren der Schaumsubstrate eindiffundieren und steht dann nicht mehr für die eigentliche Klebung zur Verfügung.

Die im Markt etablierten Klebstoffe auf Basis von wässrigen Polyurethan-Dispersionen eignen sich in der Regel nicht für die Anwendung im Sprühapplikationsverfahren, da sie entweder nicht ausreichend schnell koagulieren, keine ausreichenden Anfangsfestigkeiten haben oder infolge der Kristallinität der Polymere sehr harte Klebenähte ausbilden, die insbesondere bei der Matratzenherstellung nicht akzeptabel sind. Auch beträgt die offene Zeit, d.h. die Zeitspanne zwischen Auftragen des Klebstoffs bis zum Zusammenfügen der Fügeteile, in der noch eine ausreichend gute Klebeverbindung erhalten wird, in der Regel nur eine Minute. Für viele Klebeprozesse wird aber mindestens die doppelte Zeitspanne benötigt.

In der WO 2013/053786 A1 werden wässrige Polyurethandispersionen beschrieben, deren Polymer eine Schmelztemperatur von 30 bis 50°C, bestimmt durch dynamische Differenz-Thermoanalyse gemäß DIN 65467 bei einer Aufheizrate von 20 K/min, aufweist, wobei das Polymer zwei unterschiedlich kristallisierende Polyesterpolyole in vorgegebenen Mengenverhältnissen aufweist. Diese Polyurethandispersionen eignen sich in erster Linie als Kaltkontaktklebstoffe, sind aber auch mittels Sprühkoagulationsverfahren einsetzbar. Allerdings sind die dabei erzielbaren Anfangsfestigkeiten für die meisten Schaumverklebungsanwendungen unzureichend.

Mit Luphen® D DS 3548 der BASF SE wird eine Epoxidharz-modifizierte Polyurethandispersion angeboten, die unter anderem auch für das Sprühkoagulationsverfahren geeignet sein soll. Basis des dabei verwendeten Epoxidharzes ist Bisphenol-A-diglycidylether. Da Bisphenol A und daraus hergestellte Folgeprodukte bezüglich einer möglichen endokrinen Wirkung insbesondere von Endverbrauchern äußerst kritisch gesehen und deshalb in der Regel abgelehnt werden, sind Bisphenol A-freie Klebstoffe und Produkte gewünscht.

Aus der EP 2 090 603 A2 sind wässrige Dispersionen bekannt, enthaltend eine Mischung aus A) einer wässrigen Polyurethan- bzw. Polyurethan-Harnstoff-Dispersion enthaltend, I. ein Polymer A) aufgebaut aus I(i) mindestens einem difunktionellen aliphatischen Polyesterpolyol mit einem Molekulargewicht von 400 bis 5000 g/mol, I(ii) mindestens einer Mischung aus Hexamethylendiisocyanat (HDI) und 1-Isocyanato-3,3,5-trimethyl-5-isocyanatomethyl-cyclohexan (IPDI) und I(iii) mindestens einem Gemisch aus zwei oder mehr aminischen Kettenverlängern, wobei zumindest eine Verbindung eine ionische Gruppe trägt, und das Polymer A) nach der Trocknung teilkristallin oder kristallin ist mit einem Glasübergang bei einer Glastemperatur Tg von -65 bis -40 °C, B) einer von A) verschiedenen wässrigen Polyurethan- bzw. Polyurethan-Harnstoff-Dispersion enthaltend, II. ein Polymer B) aufgebaut aus II(i) mindestens einem difunktionellen aromatischen Polyesterpolyol mit einem Molekulargewicht von 400 bis 5000 g/mol, II(ii) mindestens einer difunktionellen Polyolkomponente mit einem Molekulargewicht von 62 bis 399 g/mol, II(iii)mindestens einem aliphatischen Diisocyanat und II(iv) mindestens einem aminischen Kettenverlängerer mit einer ionischen Gruppe, wobei das Polymer B) nach der Trocknung amorph ist mit einem Glasübergang bei einer Glastemperatur Tg von -15 bis +10 °C.

Diese Zusammensetzungen von wässrigen Polyurethan- bzw. Polyurethan-Polyharnstoff-Dispersionen eigenen sich als Klebstoffe sowohl nach dem Thermoaktivierverfahren als auch nach dem Verfahren der Nassverklebung und zeigen Klebfestigkeiten, die besser sind als die ihrer Einzelkomponenten.

Die Aufgabe der vorliegenden Erfindung bestand somit in der Bereitstellung einer chlor- und Bisphenol-A-freien Alternative für Polychloropren-Dispersionsklebstoffe für die Verklebung von Schaumsubstraten nach dem Sprühapplikationsverfahren, die die Nachteile des Standes der Technik nicht aufweisen und sich insbesondere durch hohe Anfangsfestigkeiten und eine ausreichend lange offene Zeit, bevorzugt von mindestens 2 Minuten, auszeichnen. Diese Aufgaben werden erfindungsgemäß gelöst durch die Verwendung einer wässrigen Dispersion enthaltend mindestens ein Polyurethan-Polyharnstoff-Polymer aufgebaut aus
(a) mindestens einem difunktionellen Polyesterpolyol mit einem zahlenmittleren Molekulargewicht von 400 bis 5000 g/mol,
(b) mindestens einer difunktionellen Polyolkomponente mit einem zahlenmittleren Molekulargewicht von 62 bis 399 g/mol,
(c) mindestens einem Diisocyanat und
(d) mindestens einem Kettenverlängerer gegebenenfalls enthaltend mindestens eine ionische Gruppe
für die Verklebung von mindestens zwei Subtraten durch Applikation der wässrigen Dispersion auf mindestens eines der zu verklebenden Substrate, anschließendes Trocknen der auf dem mindestens einen Substrat vorhandenen Dispersion, um mindestens eine Klebstoffschicht und Inkontaktbringen der mindestens einen Klebstoffschicht mit einem weiteren Substrat oder mit einer auf einem weiteren Substrat vorhandenen Klebstoffschicht bei einem Druck von 0,1bis 10 bar(a) und einer Temperatur von weniger als 40 °C,
wobei das Polyurethan-Polyharnstoff-Polymer nach der Trocknung eine Glasübergangstemperatur Tg von - 65 bis 10 °C und eine Schmelztemperatur von 40 bis 80 °C aufweist.

Die Aufgaben werden erfindungsgemäß auch gelöst durch das Verfahren zum Verbinden von mindestens zwei Substraten, umfassend mindestens die Schritte
(A) Bereitstellen einer wässrigen Dispersion enthaltend mindestens ein Polyurethan-Polyharnstoff-Polymer, welches nach der Trocknung eine Glasübergangstemperatur Tg von - 65 bis 10 °C und eine Schmelztemperatur von 40 bis 80 °C aufweist, aufgebaut aus
   (a) mindestens einem difunktionellen Polyesterpolyol mit einem zahlenmittleren Molekulargewicht von 400 bis 5000 g/mol,
   (b) mindestens einer difunktionellen Polyolkomponente mit einem zahlenmittleren Molekulargewicht von 62 bis 399 g/mol,
   (c) mindestens einem Diisocyanat und
   (d) mindestens einem Kettenverlängerer gegebenenfalls enthaltend mindestens eine ionische Gruppe,
(B) Applizieren der wässrigen Dispersion aus Schritt (A) auf mindestens eines der Substrate,
(C) Trocknen der vorhandenen mindestens einen Dispersion aus Schritt (B), um mindestens eine Klebstoffschicht zu erhalten und
(D) Inkontaktbringen der mindestens einen Klebstoffschicht mit einem weiteren Substrat oder mit einer auf einem weiteren Substrat vorhandenen Klebstoffschicht bei einem Druck von 0,1 bis 10 bar(a) und einer Temperatur von weniger als 40 °C.

Die erfindungsgemäße Verwendung und das erfindungsgemäße Verfahren werden im Folgenden detailliert beschrieben.

Das erfindungsgemäß verwendete Polyurethan-Polyharnstoff-Polymer ist im Allgemeinen aufgebaut aus
(a) mindestens einem difunktionellen Polyesterpolyol mit einem zahlenmittleren Molekulargewicht von 400 bis 5000 g/mol,
(b) mindestens einer difunktionellen Polyolkomponente mit einem zahlenmittleren Molekulargewicht von 62 bis 399 g/mol,
(c) mindestens einem Diisocyanat und
(d) mindestens einem Kettenverlängerer gegebenenfalls enthaltend mindestens eine ionische Gruppe.

### Komponente (a):

Das erfindungsgemäß eingesetzte Polyurethan-Polyharnstoff-Polymer enthält als Komponente (a) mindestens einen difunktionellen Polyesterpolyol mit einem zahlenmittleren Molekulargewicht von 400 bis 5000 g/mol.

Das zahlenmittlere Molekulargewicht des difunktionellen Polyesterpolyols (a) beträgt bevorzugt 1500 bis 3000 g/mol, besonders bevorzugt 1800 bis 2500 g/mol, ganz besonders bevorzugt 1900 bis 2300 g/mol. Dem Durchschnittsfachmann ist bekannt, dass das zahlenmittlere Molekulargewicht von Polymerdiolen beispielsweise aus der OH-Zahl (Hydroxylzahl) berechnet werden kann. Bei monomeren Polyolen entspricht das Molekulargewicht der absoluten Molekülmasse in Dalton. Die OH-Zahl wird nach DIN EN ISO 4629-2 in Tetrahydrofuran bestimmt.

Erfindungsgemäß können aliphatische und/oder aromatische difunktionelle Polyesterpolyole eingesetzt werden.

Erfindungsgemäß bevorzugt kommen als geeignete difunktionelle, aliphatische Polyesterpolyole (a) insbesondere lineare Polyesterdiole in Betracht, wie sie in bekannter Weise aus aliphatischen oder cycloaliphatischen Dicarbonsäuren, wie Bernstein-, Methylbernstein-, Glutar-, Adipin-, Pimelin-, Kork-, Azelain-, Sebacin-, Nonandicarbon-, Decandicarbon-, Tetrahydrophthal-, Hexahydrophthal-, Cyclohexandicarbon-, Malein-, Fumar-, Malon- oder deren Gemische mit mehrwertigen Alkoholen, wie Ethandiol, Di-, Tri-, Tetraethylenglykol, 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol oder deren Gemische hergestellt werden können. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Erfindungsgemäß als Komponente (a) bevorzugt sind difunktionelle aliphatische Polyesterpolyole auf Basis Bernsteinsäure, Methylbernsteinsäure, Glutarsäure, Adipinsäure oder Maleinsäure und 1,3-Propandiol, 1,4-Butandiol oder 1,6-Hexandiol.

Als Komponente (a) besonders bevorzugt sind difunktionelle aliphatische Polyesterpolyole auf Basis Adipinsäure und 1,4-Butandiol oder 1,6-Hexandiol.

Als Komponente (a) ganz besonders bevorzugt sind difunktionelle aliphatische Polyesterpolyole auf Basis Adipinsäure und 1,4-Butandiol.

In einer besonderen Ausführungsform können als Komponente (a) Polyesterpolyole auf Basis von epsilon-Caprolacton oder dessen Derivaten und Copolymere enthaltend epsilon-Caprolacton oder dessen Derivate eingesetzt werden.

Das zahlenmittlere Molekulargewicht des difunktionellen, aliphatischen Polyesterpolyols (a) beträgt im Allgemeinen 400 bis 5000 g/mol, bevorzugt 1500 bis 3000 g/mol, besonders bevorzugt 1900 bis 2500 g/mol, ganz besonders bevorzugt 2100 bis 2300 g/mol.

Dem Durchschnittsfachmann ist bekannt, dass das zahlenmittlere Molekulargewicht von Polymerdiolen beispielsweise aus der OH-Zahl (Hydroxylzahl) berechnet werden kann. Bei monomeren Polyolen entspricht das Molekulargewicht der absoluten Molekülmasse in Dalton. Die OH-Zahl wird nach DIN EN ISO 4629-2 in Tetrahydrofuran bestimmt.

Als geeignete difunktionelle, aromatische Polyesterpolyole (a) kommen insbesondere lineare Polyesterdiole in Betracht, wie sie in bekannter Weise aus aromatischen Dicarbonsäuren, wie z.B. Terephthal-, Isophthal- oder o-Phthalsäure sowie deren Säureanhydride, wie z.B. o-Phthalsäureanhydrid, mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol oder deren Gemische, hergestellt werden können.

Bevorzugt sind difunktionelle, aromatische Polyesterpolyole (a) auf Basis o-Phthalsäure, o-Phthalsäureanhydrid und 1,4-Butandiol oder 1,6-Hexandiol.

Besonders bevorzugt sind difunktionelle, aromatische Polyesterpolyole (a) auf Basis o-Phthalsäure oder o-Phthalsäureanhydrid und 1,6-Hexandiol.

Das zahlenmittlere Molekulargewicht des difunktionellen, aromatischen Polyesterpolyols (a) liegt bei 400 bis 5000 g/mol, bevorzugt 1500 bis 3000 g/mol, besonders bevorzugt 1800 bis 2300 g/mol, ganz besonders bevorzugt 1900 bis 2100 g/mol.

Dem Durchschnittsfachmann ist bekannt, dass das zahlenmittlere Molekulargewicht von Polymerdiolen beispielsweise aus der OH-Zahl (Hydroxylzahl) berechnet werden kann. Bei monomeren Polyolen entspricht das Molekulargewicht der absoluten Molekülmasse in Dalton. Die OH-Zahl wird nach DIN EN ISO 4629-2 in Tetrahydrofuran bestimmt.

### Komponente (b):

Das erfindungsgemäß eingesetzte Polyurethan-Polyharnstoff-Polymer enthält als Komponente (b) mindestens eine difunktionelle Polyolkomponente mit einem zahlenmittleren Molekulargewicht von 62 bis 399 g/mol.

Als Komponente (b) geeignete difunktionelle Polyolkomponenten mit einem Molekulargewicht von 62 bis 399 g/mol sind beispielsweise mehrwertige Alkohole, wie Ethandiol, Di-, Tri-, Tetraethylenglykol, 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol oder deren Gemische. Erfindungsgemäß als Komponente (b) sind auch niedermolekulare Polyesterdiole, wie Adipinsäure-bis-(hydroxyethyl)-ester, und/oder kurzkettige difunktionelle Polyetherpolyole, wie die Homo-, Misch- und Propfpolymerisate des Ethylenoxid oder des Propylenoxid.

Besonders bevorzugte als Komponente (b) werden 1,4-Butandiol und/oder 1,6-Hexandiol, besonders bevorzugt 1,6-Hexandiol, eingesetzt.

### Komponente (c):

Das erfindungsgemäß eingesetzte Polyurethan-Polyharnstoff-Polymer enthält als Komponente (c) mindestens ein Diisocyanat.

Als mindestens ein Diisocyanat (c) können im Allgemeinen alle dem Fachmann als geeignet bekannten Diisocyanate eingesetzt werden. Komponente (c) ist bevorzugt ausgewählt aus der Gruppe bestehend aus aliphatischen, cycloaliphatischen, araliphatischen und aromatischen Diisocyanaten.

Als Komponente (c) können erfindungsgemäß aliphatische Verbindungen eingesetzt werden, die mindestens zwei freie Isocyanatgruppen pro Molekül aufweisen. Bevorzugt werden Diisocyanate der allgemeinen Formel Y(NCO)₂ eingesetzt, wobei Y für einen zweiwertigen aliphatischen Kohlenwasserstoffrest mit 4 bis 12 Kohlenstoffatomen oder einen zweiwertigen cycloaliphatischen Kohlenwasserstoffrest mit 6 bis 15 Kohlenstoff-Atomen oder einen zweiwertigen araliphatischen Rest mit 8 bis 22 Kohlenstoffatomen oder einen zweiwertigen aromatischen mit 6 bis 20 Kohlenstoffatomen steht.

Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan oder 4,4'-Diisocyanato-dicyclohexylpropan-(2,2), 4,4'-Diisocyanatodicyclohexylmethan (H12MDI), 2,4-Toluylendiisocyanat und/oder 2,6-Toluylendiisocyanat (TDI), Diphenylmethan-2,2'-diisocyanat, Diphenylmethan-2,4'-diisocyanat und/oder Diphenylmethan-4,4'-diisocyanat (MDI) oder Gemische davon.

Besonders bevorzugt sind Hexamethylendiisocyanat (HDI), 1-Isocyanato-3,3,5-trimethyl-5-isocyanatomethyl-cyclohexan (IPDI) sowie 4,4'-Diisocyanato-dicyclohexyl-methan und Gemische davon. Bevorzugt werden die Isocyanate jedoch allein eingesetzt. Ganz besonders bevorzugt ist Hexamethylendiisocyanat (HDI).

Bevorzugt wird erfindungsgemäß ein Diisocyanate (c) eingesetzt, ausgewählt aus der Gruppe bestehend aus Pentamethylendiisocyanat, Hexamethylendiisocyanat (HDI), 1-Isocyanato-3,3,5-trimethyl-5-isocyanatomethyl-cyclohexan (IPDI), 4,4'-Diisocyanatodicyclohexylmethan (H12MDI), 2,4-Toluylendiisocyanat und/oder 2,6-Toluylendiisocyanat (TDI), Diphenylmethan-2,2'-diisocyanat, Diphenylmethan-2,4'-diisocyanat und/oder Diphenylmethan-4,4'-diisocyanat (MDI) und Mischungen davon.

Weiter bevorzugt wird erfindungsgemäße als Komponente (c) eine Mischung aus Hexamethylendiisocyanat (HDI) und 1-Isocyanato-3,3,5-trimethyl-5-isocyanatomethyl-cyclohexan (IPDI) eingesetzt. Das Molverhältnis HDI : IPDI liegt weiter bevorzugt bei 9:1 bis 1:9, besonders bevorzugt 3:1 bis 1:3, ganz besonders bevorzugt beträgt es 2:1.

In einer weiteren besonders bevorzugten Ausführungsform können als Komponente (c) auch Polyisocyanate auf Basis von H12MDI oder auf Basis von Mischungen von H12MDI und HDI und/oder IPDI eingesetzt werden.

In einer weiteren besonders bevorzugten Ausführungsform können als Komponente (c) auch aromatische Isocyanate wie TDI, MDI oder Mischungen von aromatischen Isocyanaten wie TDI, MDI mit aliphatischen Isocyanaten, insbesondere den oben genannten eingesetzt werden.

### Komponente (d):

Das erfindungsgemäß eingesetzte Polyurethan-Polyharnstoff-Polymer enthält als Komponente (d) mindestens einen, bevorzugt aminischen, Kettenverlängerer, gegebenenfalls enthaltend mindestens eine ionische Gruppe.

Als Komponente (d) können im Allgemeinen alle dem Fachmann als geeignet bekannten Kettenverlängerer gegebenenfalls enthaltend mindestens eine ionische Gruppe eingesetzt werden.

Erfindungsgemäß bevorzugt werden als Komponente (d) aminische Kettenverlängerer mit mindestens einer ionischen Gruppe eingesetzt, insbesondere (d) Diaminoverbindungen, die zusätzlich Sulfonat- und/oder Carboxylatgruppen tragen, besonders bevorzugt ausgewählt aus der Gruppe bestehend aus Natrium- oder Kaliumsalzen der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulfonsäure, der analogen Carbonsäuren und Mischungen davon.

Ganz besonders bevorzugt sind als Komponente (d) die Natriumsalze der N-(2-Aminoethyl)-2-aminoethansulfonsäure oder der analogen Carbonsäure, ganz besonders bevorzugt ist das Natriumsalz der N-(2-Aminoethyl)-2-aminoethansulfonsäure.

Die aminischen Kettenverlängerer mit mindestens einer ionischen Gruppe (d) können erfindungsgemäß alleine oder zusammen mit anderen Kettenverlängeren eingesetzt werden. Bevorzugt werden sie alleine eingesetzt.

Andere aminische Kettenverlängerer im Rahmen der vorliegenden Erfindung sind beispielsweise Monoamine, Aminoalkohole oder Diamine.

Erfindungsgemäß geeignete Monoamine sind aliphatische und/oder alicyclische primäre und/oder sekundäre Monoamine wie Ethylamin, Diethylamin, die isomeren Propyl- und Butylamine, höhere linear-aliphatische Monoamine und cycloaliphatische Monoamine wie Cyclohexylamin.

Erfindungsgemäß geeignete Aminoalkohole, d. h. Verbindungen, die in einem Molekül Aminound Hydroxylgruppen enthalten, sind beispielsweise Ethanolamin, N-Methylethanolamin, Diethanolamin, 1,3-Diamino-2-propanol, N-(2-Hydroxyethyl)-ethylendiamin, N,N-Bis(2-Hydroxyethyl)-ethylendiamin oder 2-Propanolamin. Weitere Beispiele für andere aminische Kettenverlängerer sind Monoaminoverbindungen, die zusätzlich Sulfonsäure- und/oder Carboxylgruppen tragen, wie Taurin, Glycin oder Alanin.

Erfindungsgemäß geeignete Diamine sind beispielsweise 1,2-Ethandiamin, 1,6-Hexamethylendiamin, 1-Amino-3,3,5-trimethyl-5-aminomethyl-cyclohexan (Isophorondiamin), Piperazin 1,4-Diaminocyclohexan oder Bis-(4-aminocyclohexyl)-methan. Weiterhin kommen Adipinsaeuredihydrazid, Hydrazin bzw. Hydrazinhydrat in Frage. Auch Polyamine wie Diethylentriamin können anstelle einer Diaminoverbindung als Aufbaukomponente eingesetzt werden.

In einer erfindungsgemäßen Ausführungsform wird als Komponente (d) bevorzugt eine Mischung aus zwei oder mehr aminischen Kettenverlängeren, wobei zumindest ein aminischer Kettenverlängerer mindestens eine ionische Gruppe trägt, eingesetzt. Mit Kettenverlängerern im Sinne der vorliegenden Erfindung sind auch Monoamine gemeint, die zum Kettenabbruch führen.

Besonders bevorzugte Bestandteile einer als Komponente (d) eingesetzten Mischung sind Diethanolamin, 1,2-Ethandiamin, 1-Amino-3,3,5-trimethyl-5-aminomethyl-cyclohexan (Isophorondiamin), Piperazin, N-(2-Hydroxyethyl)-ethylendiamin und die Natriumsalze der N-(2-Aminoethyl)-2-aminoethansulfonsäure/-carbonsäure.

Erfindungsgemäß besonders bevorzugt wird als Komponente (d) eine Mischung aus Diethanolamin und dem Natriumsalz der N-(2-Aminoethyl)-2-aminoethansulfonsäure eingesetzt.

Das erfindungsgemäß eingesetzte Polyurethan-Polyharnstoff-Polymer ist nach der Trocknung teilkristallin, d.h. es weist mindestens eine Glasübergangstemperatur Tg von -65 bis 10 °C, bevorzugt -60 bis -20 °C, besonders bevorzugt -55 bis -30°C und mindestens einen Schmelzpunkt im Bereich 40 bis 80°C.

Als teilkristallin wird im Rahmen der vorliegenden Erfindung insbesondere ein Polyurethan-Polyharnstoff-Polymer bezeichnet, wenn es in der DSC-Messung nach DIN 65467 bei einer Aufheizrate von 20 K/min einen Schmelzpeak aufweist, der einer Schmelzenthalpie ≥ 5 J/g, bevorzugt ≥ 10 J/g, besonders bevorzugt ≥ 20 J/g und ganz besonders bevorzugt ≥ 40 J/g entspricht. Der Schmelzpeak wird durch das Aufschmelzen regelmäßiger Teilstrukturen im Polymer verursacht.

Die Schmelztemperatur des erfindungsgemäß eingesetzten Polyurethan-Polyharnstoff-Polymers liegt dabei bei 40 bis 80 °C, bevorzugt bei 40 bis 70 °C, besonders bevorzugt bei 42 bis 55 °C. Ausgewertet wird jeweils die erste Aufheizung, um auch langsam kristallisierende Polymere zu erfassen.

Als amorph wird ein Polyurethan-Polyharnstoff Polymer bezeichnet, wenn es bei der ersten Aufheizung keinen Schmelzpeak oder lediglich einen Schmelzpeak mit einer Schmelzenthalpie ≤ 5 J/g, bevorzugt ≤ 3 J/g, besonders bevorzugt ≤ 1 J/g, aufweist.

In einer bevorzugten Ausführungsform der vorliegenden Erfindung werden amorphe Polyurethan-Polyharnstoff-Polymere mit kristallisierenden Polyurethan-Polyharnstoff-Polymeren vermischt. In diesen bevorzugten Mischungen liegt der Anteil an kristallisierendem Polyurethan-Polyharnstoff-Polymer bevorzugt bei ≥ 5 Gew.-%, besonders bevorzugt bei ≥ 20 Gew.-%, ganz besonders bevorzugt bei ≥ 40 Gew.-%, jeweils bezogen auf die gesamte Mischung.

Die erfindungsgemäß eingesetzte wässrige Polyurethan-Polyharnstoff-Dispersion weist bevorzugt einen Festkörpergehalt von 20 bis 60 Gew.-%, bevorzugt von 25 bis 55 Gew.-% und besonders bevorzugt von 30 bis 50 Gew.-%, auf.

Die erfindungsgemäß eingesetzte wässrige Dispersion enthaltend die oben beschriebenen erfindungsgemäßen Polyurethan-Polyharnstoff-Polymere und Polymermischungen können im Allgemeinen nach jedem dem Fachmann bekannten Verfahren hergestellt werden. Bevorzugt sie nach dem Acetonverfahren hergestellt. Dazu werden bevorzugt Prepolymere aus den Komponenten (a) bis (c) hergestellt, in Aceton gelöst und mit der Komponente (d) kettenverlängert. Nach der Dispergierung mit Wasser wird das Aceton bevorzugt abdestilliert. Die Anwendung und Durchführung des Acetonverfahrens ist Stand der Technik und dem Fachmann bekannt.

Erfindungsgemäß bevorzugt enthält die wässrige Polyurethan-Polyharnstoff-Dispersion keine externen Emulgatoren.

In einer weiter bevorzugten Ausführungsform kann die erfindungsgemäße wässrige Dispersion enthaltend mindestens ein Polyurethan-Polyharnstoff-Polymer weitere Bestandteile enthalten.

Diese sind beispielsweise ausgewählt aus der Gruppe bestehend aus Oxidationstabilisatoren, Hydrolysestabilisatoren, organischen und anorganischen Füllstoffen, Weichmachern, anderen Dispersionen enthaltend Polymere, wie z.B. PVC (Polyvinylchlorid), PVA (Polyvinylacetat), EVA (Polyethylenvinylacetat), PAC (Polyacrylat), CR (Polychloropren), PS (Polystyrol), SBR (Polystyrolbutadien), NBR (Polyacrylnitril) und Mischungen davon, Tackifiern, Pigmenten, Polysiloxandispersionen, Isocyanaten, blockierten Isocyanaten und Mischungen davon, um beispielsweise die Eigenschaften der Dispersion den Bedürfnissen anzupassen.

Der Anteil der gegebenenfalls vorliegenden weiteren Bestandteile beträgt bevorzugt höchstens 70 Gew.-%, und wenigstens 0,01 Gew.-% besonders bevorzugt höchstens 50 Gew.-%, ganz besonders bevorzugt höchstens 30 Gew.-%, jeweils bezogen auf den Feststoffanteil der Gesamtformulierung.

Erfindungsgemäß beträgt der Feststoffgehalt der wässrigen Dispersion enthaltend mindestens ein Polyurethan-Polyharnstoff-Polymer 20 bis 70 Gew.-%, bevorzugt 25 bis 60 Gew.-%, besonders bevorzugt 30 bis 55 Gew.-%.

Bei der erfindungsgemäßen Verwendung kann die erfindungsgemäße wässrige Dispersion im Allgemeinen nach allen dem Fachmann bekannten Verfahren auf mindestens ein vorhandenes Substrat aufgebracht werden.

Bevorzugt wir die erfindungsgemäße wässrige Dispersion mittels einer Sprühpistole gefördert, bevorzugt mittels einer dem Fachmann bekannten Airless- oder Luft-zerstäubenden Sprühpistole. Bevorzugt wird dabei mit Zerstäuberluft mit einem Druck von 0,1 bis 5 bar(a) Druck versprüht. Es ist erfindungsgemäß aber auch möglich, dass "airless" gefördert werden, wie z.B. in der WO 2015/137808 beschrieben.

Gemäß der vorliegenden Erfindung wird die wässrige Dispersion bevorzugt in einer Auftragsmenge (nass) von 20 bis 180 g/m², besonders bevorzugt 30 bis 160 g/m², ganz besonders bevorzugt 40 bis 140 g/m², insbesondere bevorzugt 45 bis 120 g/m², appliziert.

Gemäß der vorliegenden Erfindung wird die wässrige Dispersion bevorzugt in einer Auftragsmenge (fest) von 10 bis 90 g/m², besonders bevorzugt 15 bis 80 g/m², ganz besonders bevorzugt 20 bis 60 g/m², appliziert wird.

Erfindungsgemäß ist die Auftragsmenge auf das Schaumsubstrat ≤ 150 g/qm (nass), bevorzugt ≤ 100 g/qm (nass), besonders bevorzugt ≤ 75 g/qm (nass), und ganz besonders bevorzugt ≤ 50 g/qm (nass).

Die Viskosität der erfindungsgemäß eingesetzten wässrigen Dispersion liegt im Allgemeinen bei ≤ 1000 mPa*s, bevorzugt ≤ 500 mPa*s, besonders bevorzugt ≤ 200 mPa*s, ganz besonders bevorzugt ≤ 100 mPa*s, insbesondere bevorzugt ≤ 50 mPa*s. Die Viskosität der erfindungsgemäß eingesetzten wässrigen Disperion beträgt dabei bevorzugt mindestens 10 mPa*s. Die genannten VIskositäten werden jeweils gemessen nach DIN 53019 bei 23°C mit Spindel L2 bei 30 Umdrehungen / Minute.

Die erfindungsgemäße Kombination aus niedriger Auftragsmenge (nass), hoher Oberflächenspannung der wässrigen Dispersion und niedriger Viskosität erlaubt den Auftrag der wässrigen Dispersion auf insbesondere diskontinuierliche Oberflächenstrukturen bevorzugt in Form von Tropfen und Flächen, die weiter bevorzugt nicht zu einem kontinuierlichen Film auf der Oberfläche des Substrates verlaufen.

Erfindungsgemäß ist der Einsatz von wässrigen Dispersionen mit hoher Obeflächenspannung von bevorzugt ≥ 30 mN/m, besonders bevorzugt ≥ 35 mN/m, ganz besonders ≥ 40 mN/m, bevorzugt. Die Oberflächenspannung wird dabei nach DIN 53593 gemessen. Typischerweise werden bei filmbildenden Lacken und Klebstoffen Hilfsmittel zugesetzt, die die Oberflächenspannung deutlich reduzieren, um zu besseren Filmbildungseigenschaften zu gelangen, dadurch wird besonders bei porösen Körpern und wässrigen Dispersionen mit niedriger Viskosität eine Benetzung der inneren Flächen der Körper aufgrund von Kapillareffekten und Oberflächeneffekten bevorzugt, was im erfindungsgemäßen Einsatz unerwünscht ist.

Erfindungsgemäß bevorzugt liegt das mindestens eine Polyurethan-Polyharnstoff-Polymer zu ≥ 30 Gew.-%, besonders bevorzugt ≥ 50 Gew.-%, ganz besonders bevorzugt ≥ 70 Gew.-%, jeweils bezogen auf das Feststoffgewicht, nach Auftrag und Trocknung als Feststoff auf der Oberfläche vor.

Das bedeutet erfindungsgemäß insbesondere, dass, jeweils bezogen auf das Feststoffgewicht, ≥ 30 Gew.-%, bevorzugt ≥ 50 Gew.-%, besonders bevorzugt ≥ 70 Gew.-%, des mindestens einen Polyurethan-Polyharnstoff-Polymers maximal bis zu einer Eindringtiefe von höchstens 1 mm, bevorzugt höchstens 0,5 mm, besonders bevorzugt höchstens 0,2 mm, auf der Substratoberfläche vorliegen. Durch dieses erfindungsgemäße bevorzugtes Merkmal können eine besonders effiziente Klebstoffausbeute und außerdem eine im Vergleich zum Stand der Technik weiche und dünne Klebenaht erzielt werden, obwohl ein hochmoduliges, kristallines Polyurethan-Polyharnstoff-Polymer als Klebstoff eingesetzt wird.

Erfindungsgemäß bevorzugt erfolgt der Auftrag mittels Airless- oder Luft-zerstäubender Applikation in solcher Weise, dass die Oberflächenspannung der zu verstäubenden wässrigen Dispersion so hoch ist, das sich auf den Substraten Inseln bzw. Tröpfchen, aber kein einheitlicher Film, bilden.

In einer besonderen Ausführungsform der vorliegenden Erfindung kann die erfindungsgemäß eingesetzte wässrige Dispersion aufgedruckt werden, beispielswiese mittels eines digitalen Druckverfahrens wie Piezo-Druck, Bubblejet-Druck oder Valve-Jet-Druck. Mit dieser Ausführungsform können erfindungsgemäß, bevorzugt auch ohne Materialverlust durch Overspray, optimierte Klebstoffmuster appliziert werden, die der jeweiligen Verbindungsproblemstellung optimal angepasst sind, beispielsweise bezüglich Ort, Material und Schichtdickenauftrag der wässrigen Dispersion.

Erfindungsgemäß werden bevorzugt zwei Substrate miteinander verklebt. In einer Ausführungsform der vorliegenden Erfindung wird nur eine der mindestens zwei miteinander zu verklebenden Substrate mit der wässrigen Dispersion beaufschlagt und entsprechend behandelt, bevor die so gebildete Klebstoffschicht mit einem weiteren Substrat in Kontakt gebracht wird.

In einer weiteren bevorzugten erfindungsgemäßen Ausführungsform erfolgt die Auftragung der wässrigen Dispersion enthaltend mindestens ein Polyurethan-Polyharnstoff-Polymer auf mindestens zwei, bevorzugt zwei, der mindestens zwei, bevorzugt zwei, d.h. beide, zu verklebenden Substrate, insbesondere Substratoberflächen.

Erfindungsgemäß können je nach Bedarf unterschiedliche Substratoberflächen mit unterschiedlichen wässrigen Dispersionen enthaltend mindestens ein Polyurethan-Polyharnstoff-Polymer, d.h. aus unterschiedlichen oben genannten Komponenten aufgebaut, beschichtet werden.

Entgegen den Verfahren aus dem Stand der Technik erfolgt die Kontaktierung der mit der Klebstoffschicht beschichteten Substratoberflächen mit den zu verklebenden Oberflächen bevorzugt nach nahezu vollständiger Trocknung der aufgesprühten oder aufgedruckten wässrigen Dispersionen. Der Wassergehalt der Klebstoffschicht beträgt daher bevorzugt weniger als 20 Gew.-%, bevorzugt weniger als 10 Gew.-%, besonders bevorzugt weniger als 8 Gew.-%, ganz besonders bevorzugt weniger als 5 Gew.-%, insbesondere bevorzugt weniger als 3 Gew.-%. Der Wassergehalt der Klebstoffschicht wird dabei als Restwassergehalt in Gewichtsprozent als Differenz zwischen dem Auftrag an wässriger Dispersion und dem Trockengewicht nach Trocknung bei 40 °C in einem Umluftofen nach 24 h bestimmt.

Das Trocknen der wässrigen Dispersion, um die Klebstoffschicht zu erhalten, erfolgt bevorzugt bei Raumtemperatur, kann aber abhängig von der Anwendung auch durch Trocknung mittels Heißluft oder beispielsweise IR-Strahlung erfolgen.

Erfindungsgemäß erfolgt die Verklebung von Substraten durch Kontaktierung der Substrate bei Temperaturen unterhalb der Schmelztemperatur der erfindungsgemäß eingesetzten mindestens einen Polyurethan-Polyharnstoff-Polymere, d.h. bei einer Temperatur von weniger als 40 °C, bevorzugt weniger als 35 °C, besonders bevorzugt weniger als 30 °C und ganz besonders bevorzugt weniger als 25 °C.

Erfindungsgemäß erfolgt das Inkontaktbringen der zu verklebenden Oberflächen mindestens 5 sec, bevorzugt mindestens 30 sec. und ganz besonders bevorzugt mindestens 2 min, nach Erwärmen der wässrigen Dispersion auf dem Substrat auf eine der oben genannten Temperaturen, bevorzugt für eine Zeit von mindestens 1 sec.

Erfindungsgemäß erfolgt die Verklebung von Substraten durch Kontaktierung der Substrate bei einem Druck von 0,1 bis 5 bar(a), bevorzugt 0,2 bis 3 bar(a), besonders bevorzugt 0,25 bis 2 bar(a), insbesondere bevorzugt 0,3 bis 1,5 bar(a).

Erfindungsgemäß erfolgt das Inkontaktbringen der mit der Klebstoffschicht beschichteten Substrate im Allgemeinen innerhalb eines Zeitraums von 5 sec bis 120 min, bevorzugt 30 sec bis 60 min, besonders bevorzugt 2 min bis 30 min.

Erfindungsgemäß sind im Allgemeinen alle dem Fachmann bekannten Substrate miteinander bzw. untereinander zu verkleben. Bevorzugt wird erfindungsgemäß mindestens eine Substrat eingesetzt, welches ein Schaumsubstrat oder ein poröses Material ist, bevorzugt mit einer Raumdichte von weniger als 200 g/l, besonders bevorzugt von weniger als 120 g/l, ganz besonders bevorzugt von weniger als 80 g/l.

Unter einem Schaumsubstrat versteht man ein Substrat aus Schaumstoff, wobei Schaumstoffe im Allgemeinen künstlich hergestellte Stoffe mit zelliger Struktur und niedriger Dichte sind. Erfindungsgemäß einsetzbare Schaumstoffe können offenzellig, geschlossenzellig oder gemischtzellig, bevorzugt offenzellig oder gemischtzellig, sein. Je nach Härtegrad werden die Schaumstoffe in Hart- und Weichschäume eingeteilt. Zum Schäumen eignen sich fast alle Kunststoffe.

In einer bevorzugten Ausführung der vorliegenden Erfindung enthalten, bevorzugt bestehen, das oder die Schaumsubstrate aus Polyurethan und/oder einem Kautschuk wie z.B. Naturkautschuk (NR), Styrol-Butadien-Kautschuk (SBR), Ethylen-Propylen-Dien-Polymer (EPDM), Butadien-Acrylnitril-Kautschuk (NBR) oder Chloropren-Kautschuk (CR).

In einer besonders bevorzugten Ausführung der Erfindung bestehen das oder die Schaumsubstrate aus Polyurethan.

Es ist erfindungsgemäß möglich, dass ein Schaum oder ein poröses Material mit einem weiteren Schaum oder porösem Material verklebt wird, wobei beide Schäume bzw. porösen Materialien gleich oder unterschiedlich sein können. Es ist erfindungsgemäß auch möglich, dass ein Schaum oder ein poröses Material mit einem nicht porösen Material, beispielsweise ausgewählt aus der Gruppe bestehend aus Holz, Papier, Leder, Textilien, Kork, Kunststoffen, insbesondere Thermoplaste, Elastomere, Duromere, Komposite, beispielsweise Polyvinylchlorid, Polyurethane, Polyvinylacetat, ABS, Kautschuke, Polyethylvinylacetat, Polycarbonat oder Polyolefinen, wie z.B. gefülltes oder ungefülltes Polypropylen, und Kombinationen davon, verklebt werden.

Das in der erfindungsgemäße eingesetzten wässrigen Dispersion enthaltende mindestens eine Polyurethan-Polyharnstoff-Polymer bildet in einer bevorzugten Ausführungsform auf der Oberfläche eines Schaums oder eines porösen Materials im Gegensatz zum Stand der Technik bei Auftreffen keinen durchgehenden Film, der im nassem Zustand sofort klebrig ist oder der im nassen Zustand durch Verpressen und nachträglichem Trocknen verklebt wird.

Da die Verklebung erfindungsgemäß bevorzugt erst nach Trocknen der wässrigen Dispersion auf dem Substrat stattfindet und eine Aktivierung, insbesondere durch Erhitzen, zu jedem beliebigen Zeitpunkt und auch getrennt vom Trocknungsprozess stattfinden kann, ist keine Topfzeit zu beachten. Vorteilhaft an dieser erfindungsgemäßen Eigenschaft ist, dass der Auftragsort der wässrigen Dispersion vom Aktivierungsort und/oder vom Ort der Herstellung der Klebeverbindung getrennt werden können.

In einer bevorzugten erfindungsgemäßen Ausführungsform muss von zwei beschichteten Substraten nur ein Substrat wärmeaktiviert werden. Die Verklebung erfolgt dann durch Inkontaktbringen des einen wärmeaktivierten Substrates auf das andere erfindungsgemäß beschichtete, aber nicht wärmeaktivierte, Substrat.

Ein weiterer Vorteil der vorliegenden Erfindung besteht darin, dass trockene Klebstoffschichten mit weiteren Substraten verklebt werden können. Gerade im Bereich der Schaumverklebung, insbesondere bei der Herstellung von Möbeln, Matratzen und ähnlichem, ist die Restfeuchte bzw. der Restgehalt an Lösungsmittel bei einer Verklebung mit wässrigen oder auf Lösungsmitteln basierten Klebstoffen ein großes Problem, was durch die vorliegenden Erfindung vermieden werden kann, besonders dann, wenn die hergestellten Produkte direkt nach der Verklebung in eine Verpackung eingeschweißt werden.

Die erfindungsgemäß erhaltenen Verklebungen zeigen ausreichende Sofortfestigkeiten, insbesondere bis hin zum sofortigen Materialausriss.

Die offene Zeit der erfindungsgemäß eingesetzten wässrigen Dispersionen beträgt bevorzugt mindestens 2 Minuten, besonders bevorzugt mindestens 4 Minuten, ganz besonders bevorzugt mindestens 6 min, insbesondere bevorzugt mindestens 8 min.

Insbesondere beim Verkleben von Schaum auf Schaum oder Schaum auf andere Substratoberflächen wie z.B. Holz, Metall oder Kunststoff, die eine dreidimensionale Struktur aufweisen und somit nicht flach sind, sind die erfindungsgemäß hergestellten Verklebungen in der Lage, die Rückstellkräfte des Schaums ohne Wartezeit nach der Wärmeaktivierung, insbesondere ohne vollständiges Entfernen des Wassers, aufzunehmen.

Erfindungsgemäß können die zu verklebenden Substrate, insbesondere unpolare Substrate, vor dem Aufbringen der wässrigen Dispersion einer dem Fachmann bekannten Vorbehandlung der Substratoberfläche unterzogen werden, beispielsweise durch Primern, Flämmen oder Coronabehandlung.

Besonders bevorzugt kann die vorliegende Erfindung angewandt werden zum Kleben von Schaumstoff auf Schaumstoff, Schaumstoff auf Holz, Schaumstoff auf diverse Kunststoffe, oder Textilien auf diverse andere Substrate.

Die vorliegende Erfindung betrifft auch ein Verfahren zum Verbinden von mindestens zwei Substraten, umfassend mindestens die Schritte
(A) Bereitstellen einer wässrigen Dispersion enthaltend mindestens ein Polyurethan-Polyharnstoff-Polymer, welches nach der Trocknung eine Glasübergangstemperatur Tg von -65 bis 10 °C und eine Schmelztemperatur von 40 bis 80 °C aufweist, aufgebaut aus
   (a) mindestens einem difunktionellen Polyesterpolyol mit einem Molekulargewicht von 400 bis 5000 g/mol,
   (b) mindestens einer difunktionellen Polyolkomponente mit einem Molekulargewicht von 62 bis 399 g/mol,
   (c) mindestens einem Diisocyanat und
   (d) mindestens einem Kettenverlängerer enthaltend mindestens eine ionische Gruppe,
(B) Applizieren der wässrigen Dispersion aus Schritt (A) auf mindestens eines der Substrate,
(C) Trocknen der vorhandenen mindestens einen Dispersion aus Schritt (B), um mindestens eine Klebstoffschicht zu erhalten und
(D) Inkontaktbringen der mindestens einen Klebstoffschicht mit einem weiteren Substrat oder mit einer auf einem weiteren Substrat vorhandenen Klebstoffschicht bei einem Druck von 0,1 bis 5 bar(a) und einer Temperatur von weniger als 40 °C.

Das bezüglich der erfindungsgemäßen Verwendung betreffend bevorzugte Ausführungsformen und Details Gesagte gilt für das erfindungsgemäße Verfahren entsprechend.

Insbesondere können mit der erfindungsgemäßen Verwendung bzw. mit dem erfindungsgemäßen Verfahren Klebstoffverbünde erhalten werden. Erfindungsgemäß umfasst ein Klebstoffverbund ein Substrat, die erfindungsgemäß erhaltene Klebstoffschicht und ein weiteres Substrat. Die beiden Substrate können dabei aus den gleichen oder unterschiedlichen Materialien bestehen. Die Substrate können definitionsgemäß auch Flächengebilde darstellen. Bevorzugt handelt es sich bei mindestens einem Substrat um ein Schaumsubstrat.

Die vorliegende Erfindung betrifft daher auch einen Klebstoffverbund, umfassend mindestens zwei Substrate und einen erfindungsgemäß erhaltene Klebstoffschicht.

Das bezüglich der erfindungsgemäßen Verwendung und des erfindungsgemäßen Verfahrens betreffend bevorzugte Ausführungsformen und Details Gesagte gilt für den erfindungsgemäßen Klebstoffverbund entsprechend.

### Beispiele

Nachstehend wird die Erfindung anhand der Beispiele näher erläutert. Folgende Methoden und Prüfmethoden kamen dabei zum Einsatz:

### A) Sprühapplikationsverfahren:

Die Klebstoffdispersionen wurden mit einer Standard-Spritzpistole appliziert. Dabei wurde die Klebstoffdispersion in eine Sprühpistole gefördert, und über einen Sprühstrahl auf die Substrate appliziert. Der Klebstoff wurde nach dem Auftrag auf das Substrat bei 60 °C im Ofen für 20 min getrocknet und im Anschluss nach vorgegebenen Zeiten wie in B) beschrieben verpresst. Die Auftragsmenge des Klebstoffes wurde entsprechend der Vorgaben variiert, das Substrat wurde ohne Klebstoff sowie direkt nach Auftrag des Klebstoffes und nach Trocknung im Warmluftofen auf einer Feinwaage gewogen und dadurch die Nass- als auch die Trockenauftragsmenge bestimmt und auf einen Quadratmeter umgerechnet angegeben.

Die genauen Einstellungen der Spritzpistole sind dem Fachmann prinzipiell bekannt und können ohne ungebührlich hohen Aufwand auf den speziellen Fall zugeschnitten und durch einfache Vorversuche ermittelt werden. Beispielhaft seien genannt:
Klebstoffkomponente: Förderdruck 1,3 bar(a)
Zerstäuberluftdruck: 2,8 bar(a)
Bohrung (Düse) für die Klebstoffkomponente: 1,0 mm
Auftragsgewichte: 50 bis 200 g/m² (nass)

### B) Bestimmung der Anfangsfestigkeit:

Als Prüfmaterial wurden PU-Schaumstoffkörper ST 5540 der Fa. STN Schaumstoff-Technik-Nürnberg GmbH mit den Abmessungen 10 cm x 5 cm x 3 cm und einem Raumgewicht von 40 kg/m³ verwendet.

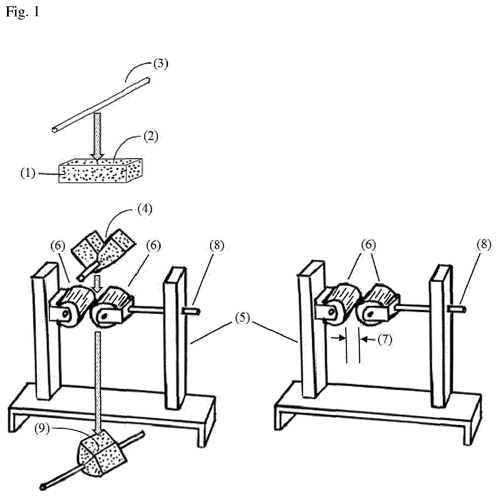

Zur Beurteilung der Anfangsfestigkeit wurden die Probekörper unmittelbar nach der Trocknung im Trockenschrank bei 60 °C mit einem Holzstab in der Mitte geknickt und sofort durch 2 Stahlrollen mit einem Abstand von 10 mm geführt (siehe Figur 1).

Die Bezugszeichen in Figur 1 haben die folgenden Bedeutungen:
- 1: Schaumstoffkörper
- 2: Oberseite der Schaumstoffkörper
- 3: Holzstab
- 4: Mitte
- 5: Prüfvorrichtung
- 6: Stahlrollen
- 7: tangentialer Abstand
- 8: Gewindespindel
- 9: Klebenaht

Die Anfangsfestigkeit war ausreichend, wenn sich der Probekörper trotz der auftretenden Rückstellkräfte nicht öffnete. Die Ergebnisse wurden nach folgender Klassifizierung eingeordnet: Anfangsfestigkeit: gut + / leicht geöffnet 0 / voll geöffnet -.

### C) Bestimmung der offenen Zeit:

Als Prüfmaterial wurden PU-Schaumstoffkörper ST 5540 der Fa. STN Schaumstoff-Technik-Nürnberg GmbH mit den Abmessungen 10 cm x 5 cm x 3 cm und einem Raumgewicht von 40 kg/m³ verwendet. Zur Beurteilung der offenen Zeit wurden die Probekörper sofort, alle 60 Sekunden oder nach Bedarf in zu definierenden Zeitabständen nach der Entnahme der Prüfkörper aus dem Warmluftofen in der Mitte geknickt und mit leichtem Handflächendruck zusammengefügt. Der Beginn und das Ende der offenen Zeit wurde dadurch angezeigt, dass die Festigkeit nicht mehr ausreicht und sich der Probekörper in Folge der auftretenden Rückstellkräfte öffnete. Die Ergebnisse wurden nach folgender Klassifizierung eingeordnet: Zeit in Minuten: < 1 min - schlecht, ≥ 4 min - befriedigend, ≥ 8 min - gut

### D) Ermittlung der Härte der Klebenaht:

Die Klebenaht der unter B) hergestellten Prüfkörper wurde nach 24 h Lagerung bei Raumtemperatur im direkten Vergleich zu Referenzproben sensorisch mittels Fühlen beurteilt. Die Referenzproben wurden mit kommerziell erhältlichen Polychoropren-Latices (Covestro Deutschland AG) unterschiedlicher Shore A-Härte hergestellt. Die Klebenaht des Probekörpers aus Dispercoll® C 84 (Shore A Härte des reinen, getrockneten Polymers = 88) wurde als Referenz für eine harte Klebenaht genommen, die Klebenaht des Probekörpers aus Dispercoll® C 74 (Shore A Härte des reinen, getrockneten Polymers = 55) wurde als Referenz für eine mittelharte Klebenaht genommen, und die Klebenaht des Probekörpers aus Dispercoll® C 2372 (Shore A Härte des reinen, getrockneten Polymers = 40) wurde als Referenz für eine weiche Klebenaht genommen. Die Dispercoll® C Produkte wurden dazu jeweils mit 200 g/m² Nassgewicht entsprechend ca. 110 g/m² Trockengewicht aufgetragen. Die Ergebnisse wurden nach folgender Klassifizierung eingeordnet: weich + / mittel hart 0 / hart -

### E) Ermittlung der Glastemperaturen, Schmelztemperaturen und Schmelzenthalpien mittels DSC:

Das Messprinzip der DSC (Differential Scanning Calorimetry) beruht darauf, dass die Probe und eine inerte Referenz in der Messzelle des Kalorimeters so erwärmt werden, dass beide stets die gleiche Temperatur haben. Probe und Referenz werden mit dem gleichen geregelten Temperatur- /Zeit-Programm aufgeheizt. Die Temperaturen von Probe und Referenz werden gemessen, verglichen und Temperaturunterschiede, die durch physikalische oder chemische Änderungen in der Probenmorphologie entstehen, kompensiert. Die aufgewendete elektrische Kompensationsleistung wird gemessen und in das Maß für den kalorischen Wärmefluss. Solche morphologischen Veränderungen sind die Folge von physikalischen Umwandlungen (Glasübergang, Schmelzen, Verdampfen) und chemischen Änderungen (Oxidation, Vernetzung). Schmelzvorgänge, Verdampfung und Fest-Fest-Umwandlungen (Glasübergang) sind endothermer Natur, dagegen sind Kristallisation, Oxidation und einige chemische Reaktionen wie Vernetzungen exotherm.

Die Glastemperaturen, Schmelztemperaturen und Schmelzenthalpien wurden mittels Differential Scanning Calorimetry (DSC) mit einem Kalorimeter Pyris Diamond DSC der Firma Perkin-Elmer bestimmt. Dazu wurde ein Film durch Rakeln der jeweiligen Dispersion mit 100 µm Nassfilmdichte auf eine Glasplatte hergestellt und dieser 3 Tage bei Raumtemperatur und 0% Raumfeuchte in einer Trockenbox getrocknet. Anschließend wurde mit 10 mg Probenmaterial die DSC-Kurve mit folgenden Messbedingungen aufgenommen: Schnelle Abkühlung auf die Starttemperatur -100 °C, danach Beginn von drei Aufheizungen von -100 °C bis +150 °C mit einer Heizrate von 20K/min und einer Kühlrate von 320K/min unter Helium-Atmosphäre und Kühlung mit flüssigem Stickstoff. Die Glastemperatur entspricht der Temperatur bei halber Höhe des Glasübergangs, wobei die dritte Aufheizung ausgewertet wurde. Für die Bestimmung der Schmelztemperaturen und Schmelzenthalpien wurde die erste Aufheizung ausgewertet.

### F) Einsatzstoffe

A: Dispercoll® U56, kristallisierende Polyurethan-Klebstoffdispersion, Glasübergangstemperatur Tg -50 °C, Schmelztemperatur Tm 49 °C, bezogen von Covestro Deutschland GmbH und eingesetzt wie bezogen,
B: Dispercoll® U54, kristallisierende Polyurethan-Klebstoffdispersion, Glasübergangstemperatur -51 °C, Schmelztemperatur 49 °C, bezogen von Covestro Deutschland GmbH und eingesetzt wie bezogen,
C: Dispercoll® U2682, kristallisierende Polyurethan-Klebstoffdispersion, Glasübergangstemeratur Tg -48 °C, Schmelztemperatur 50 °C, bezogen von Covestro Deutschland GmbH und eingesetzt wie bezogen,
D: Dispercoll® U42, amorphe Polyurethan-Klebstoffdispersion, Glasübergangstemperatur -5,1 °C, bezogen von Covestro Deutschland GmbH und eingesetzt wie bezogen,
E: Dispercoll® U2643, amorphe Polyurethan-Klebstoffdispersion, Glasübergangstemperatur -51 °C, bezogen von Covestro Deutschland GmbH und eingesetzt wie bezogen

**Tabelle 1: Ergebnisse der erfindungsgemäßen Bespiele und der Vergleichsbeispiele**

| **Nr.** | **verwendete Dispersion** | **Auftragsmenge nass/fest [g/m²]** | **Anfangsfestigkeit** | **Härte der Naht** | **Offene Zeit [min]** | **Wassergehalt Klebstoff nach Trocknung [Gew.-%]** |
|---|---|---|---|---|---|---|
| **V1** | A | 200/98 | + | - | 8 | < 10 |
| **2** | A | 108/51 | + | 0 | 8 | < 10 |
| **3** | A | 60/27 | + | + | 8 | < 10 |
| **V4** | B | 200/95 | + | - | 8 | < 10 |
| **5** | B | 100/50 | + | 0 | 4 | < 10 |
| **V7** | C | 210/100 | 0 | - | 8 | < 10 |
| **8** | C | 110/50 | 0 | 0 | 8 | < 10 |
| **9** | C | 50/24 | 0 | + | 8 | < 10 |
| **V10** | D | 200/98 | - | + | 0 | < 10 |
| **V11** | D | 100/52 | - | + | 0 | < 10 |
| **V12** | D | 50/26 | - | + | 0 | < 10 |
| **V13** | E | 210/90 | - | 0 | 0 | < 10 |
| **V14** | E | 100/39 | - | + | 0 | < 10 |
| **V15** | E | 50/21 | - | + | 0 | < 10 |

| | | | | | | |
|---|---|---|---|---|---|---|
| V Vergleichsbeispiel | | | | | | |

## Patentansprüche

1. Verwendung einer wässrigen Dispersion enthaltend mindestens ein Polyurethan-Polyharnstoff-Polymer aufgebaut aus
(a) mindestens einem difunktionellen Polyesterpolyol mit einem zahlenmittleren Molekulargewicht von 400 bis 5000 g/mol,
(b) mindestens einer difunktionellen Polyolkomponente mit einem zahlenmittleren Molekulargewicht von 62 bis 399 g/mol,
(c) mindestens einem Diisocyanat und
(d) mindestens einem Kettenverlängerer gegebenenfalls enthaltend mindestens eine ionische Gruppe,
für die Verklebung von mindestens zwei Subtraten durch Applikation der wässrigen Dispersion auf mindestens eines der zu verklebenden Substrate, anschließendes Trocknen der auf dem mindestens einen Substrat vorhandenen Dispersion, um mindestens eine Klebstoffschicht zu erhalten und Inkontaktbringen der mindestens einen Klebstoffschicht mit einem weiteren Substrat oder mit einer auf einem weiteren Substrat vorhandenen Klebstoffschicht bei einem Druck von 0,1 bis 5 bar(a) und einer Temperatur von weniger als 40 °C,
**dadurch gekennzeichnet, dass** das Polyurethan-Polyharnstoff-Polymer nach der Trocknung eine Glasübergangstemperatur Tg von - 65 bis 10 °C und eine Schmelztemperatur von 40 bis 80 °C aufweist.

2. Verwendung nach Anspruch 1, **dadurch gekennzeichnet, dass** difunktionelle aliphatische Polyesterpolyole auf Basis Bernsteinsäure, Methylbernsteinsäure, Glutarsäure, Adipinsäure oder Maleinsäure und 1,3-Propandiol, 1,4-Butandiol, und/oder 1,6-Hexandiol als Komponente (a) eingesetzt werden.

3. Verwendung nach Anspruch 1, **dadurch gekennzeichnet, dass** difunktionelle, aromatische Polyesterpolyole (a) auf Basis o-Phthalsäure, o-Phthalsäureanhydrid und 1,4-Butandiol und/oder 1,6-Hexandiol als Komponente (a) eingesetzt werden.

4. Verwendung nach einem der Ansprüche 1 bis 3, **dadurch gekennzeichnet, dass** Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan oder 4,4'-Diisocyanato-dicyclohexylpropan-(2,2), 4,4'-Diisocyanatodicyclohexylmethan (H12MDI), 2,4-Toluylendiisocyanat und/oder 2,6-Toluylendiisocyanat (TDI), Diphenylmethan-2,2'-diisocyanat, Diphenylmethan-2,4'-diisocyanat und/oder Diphenylmethan-4,4'-diisocyanat (MDI) oder Gemische davon als Komponente (c) eingesetzt werden.

5. Verwendung nach einem der Ansprüche 1 bis 4, **dadurch gekennzeichnet, dass** die eingesetzte wässrige Polyurethan-Polyharnstoff-Dispersion einen Festkörpergehalt von 20 bis 60 Gew.-%, bevorzugt von 25 bis 55 Gew.-%, besonders bevorzugt von 30 bis 50 Gew.-%, aufweist.

6. Verwendung nach einem der Ansprüche 1 bis 5, **dadurch gekennzeichnet, dass**, jeweils bezogen auf das Feststoffgewicht, ≥ 30 Gew.-%, bevorzugt ≥ 50 Gew.-%, besonders bevorzugt ≥ 70 Gew.-%, des mindestens einen Polyurethan-Polyharnstoff-Polymers maximal bis zu einer Eindringtiefe von höchstens 1 mm, bevorzugt höchstens 0,5 mm, besonders bevorzugt höchstens 0,2 mm, auf der Substratoberfläche vorliegen.

7. Verwendung nach einem der Ansprüche 1 bis 3, **dadurch gekennzeichnet, dass** die wässrige Dispersion in einer Auftragsmenge (nass) von 20 bis 180 g/m², bevorzugt 30 bis 160 g/m², besonders bevorzugt 40 bis 140 g/m², ganz besonders bevorzugt 45 bis 120 g/m², appliziert wird.

8. Verwendung nach einem der Ansprüche 1 bis 4, **dadurch gekennzeichnet, dass** die wässrige Dispersion in einer Auftragsmenge (fest) von 10 bis 90 g/m², bevorzugt 15 bis 80 g/m², besonders bevorzugt 20 bis 60 g/m², appliziert wird.

9. Verwendung nach einem der Ansprüche 1 bis 8, **dadurch gekennzeichnet, dass** als mindestens ein Substrat ein Schaumsubstrat oder ein poröses Material eingesetzt wird, bevorzugt mit einer Raumdichte von weniger als 200 g/l, besonders bevorzugt von weniger als 120 g/l, ganz besonders bevorzugt von weniger als 80 g/l.

10. Verwendung nach einem der Ansprüche 1 bis 9, **dadurch gekennzeichnet, dass** als Komponente (d) aminische Kettenverlängerer mit mindestens einer ionischen Gruppe eingesetzt werden, insbesondere Diaminoverbindungen, die zusätzlich Sulfonat- und/oder Carboxylatgruppen tragen, besonders bevorzugt ausgewählt aus der Gruppe bestehend aus Natrium- oder Kaliumsalzen der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulfonsäure, der analogen Carbonsäuren und Mischungen davon.

11. Verfahren zum Verbinden von mindestens zwei Substraten, umfassend mindestens die Schritte
(A) Bereitstellen einer wässrigen Dispersion enthaltend mindestens ein Polyurethan-Polyharnstoff-Polymer, welches nach der Trocknung eine Glasübergangstemperatur Tg von - 65 bis 10 °C und eine Schmelztemperatur von 40 bis 80 °C aufweist, aufgebaut aus
(a) mindestens einem difunktionellen Polyesterpolyol mit einem zahlenmittleren Molekulargewicht von 400 bis 5000 g/mol,
(b) mindestens einer difunktionellen Polyolkomponente mit einem zahlenmittleren Molekulargewicht von 62 bis 399 g/mol,
(c) mindestens einem Diisocyanat und
(d) mindestens einem Kettenverlängerer gegebenenfalls enthaltend mindestens eine ionische Gruppe,
(B) Applizieren der wässrigen Dispersion aus Schritt (A) auf mindestens eines der Substrate,
(C) Trocknen der vorhandenen mindestens einen Dispersion aus Schritt (B), um mindestens eine Klebstoffschicht zu erhalten und
(D) Inkontaktbringen der mindestens einen Klebstoffschicht mit einem weiteren Substrat oder mit einer auf einem weiteren Substrat vorhandenen Klebstoffschicht bei einem Druck von 0,1 bis 5 bar(a) und einer Temperatur von weniger als 40 °C.

12. Klebstoffverbund, umfassend mindestens zwei Substrate und eine zwischen jeweils zwei Substraten vorhandene Klebstoffschicht, erhalten gemäß einem der Ansprüche 1 bis 11.
